# EUROPEAN PATENT APPLICATION

(11) **EP 1 990 861 A1**
(43) Date of publication of application: **12.11.2008**
(21) Application number: 08008311.6
(22) Date of filing: 30.04.2008
(51) Int. Cl.: H01M 10/50, H01M 2/34, H01M 8/24

(54) **Battery pack**

(30) Priority: 08.05.2007 JP 2007123686
(71) Applicant: Sanyo Electric Co., Ltd., Osaka 570-8677 (JP)
(72) Inventor: Okada, Wataru, Moriguchi-shi Osaka 570-8677 (JP)
(74) Representative: Hertz, Oliver

(57) **Abstract**

The battery pack includes a battery block 3 in which a plurality of electric cells being rectangular cells are layed, and a fixture component 4 for fixing the electric cells 1 in the battery block 3. The fixture component 4 includes a pair of end plates 5 disposed on opposite side faces of the layered rectangular cells, and a metal strap with which the layered rectangular cells are fixed in their compressed state by connecting the tip of the metal strap to the end plate 5.

## Description

### BACKGROUND OF THE INVENTION

### 1. Field of the Invention

The present invention relates to a battery pack in which a plur ality of rectangular cells are layered and fixed by means of a fixture comp onent.

### 2. Description of the Related Art

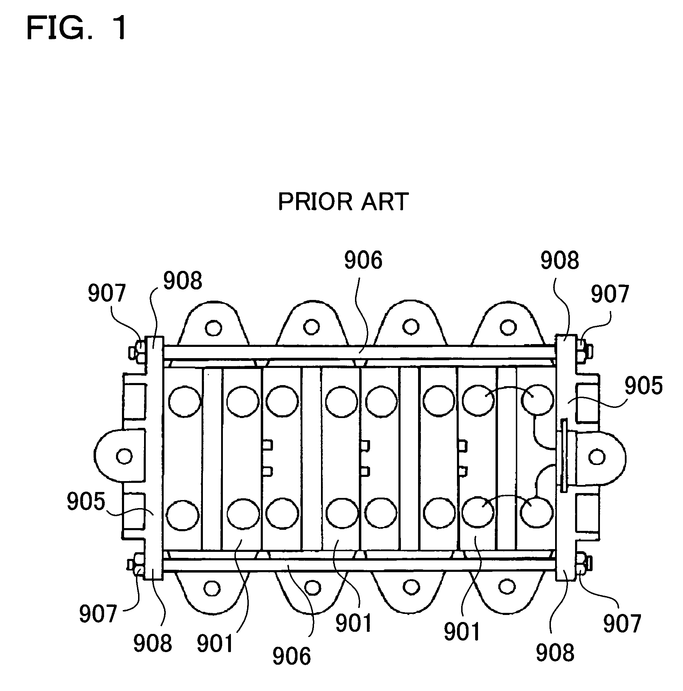

A battery pack, in which a plurality of rectangular cells are layered, is described in Japanese Utility Model Publication H3-32364-U (1991); and in such battery pack, a pair of end plates 905 are connected by means of a bolt 906 and the layered electric cells 901 are disposed between the end plates 905, as shown in Figure 1.
In the battery pack of Japanese Utility Model Publication H3-32364-U (1991) as shown in Figure 1, an auricular projection 908 is provided, at opposite sides of the end plate 905, for allowing the bolt 906 to be inserted through for connection of the bolt 906. The bolt 906 is inserted through the auricular projection 908, and a nut 907 is screwed onto a tip of the bolt to fix the end plate 905. Such structured battery pack suffers a drawback that a performance of the battery is lowered in accordance with its used state. In particular, since a lithium-ion secondary cell is used as the rectangular cell in such structured battery pack, the battery pack suffers a drawback that an internal resistance of the cell increases in accordance with its used state, resulting in reduced output power. This is because the auricular projection is prone to be deformed, which makes it impossible to securely inhibit an outer casing of the cell from being expanded. In the case of a lithium-ion secondary cell, an electrode expands at the time of an ordinary charging and discharging operations and at the time of overcharging operation, so that an interval between its positive and negative electrodes becomes widened. In such a state, a migration length of ion, which moves between the positive and negative electrodes, becomes larger, with the internal resistance being increased. In particular, when compared with a nickel-cadmium cell or the like, since the lithium-ion secondary cell has its larger internal resistance with respect to the opposing area of the electrodes, the opposing area is made larger to obtain a reduced internal resistance by thinning the positive and negative electrode plates and narrowing the interval between the electrodes. That is to say, since the interval between the positive and negative electrodes are narrowed to reduce the internal resistance, a slightly widened interval between the electrodes resulting from an expansion of the electrodes will increase the internal resistance. When the internal resistance of the cell increases, a maximal amount of the current that can be taken out becomes smaller, resulting in a smaller amount of output power as well. Since the battery pack, in which a multitude of rectangular cells are layered, is used for automobiles or the like which require larger output power, a reduction in the output power becomes a critical drawback.

Further, the battery pack shown in Figure 1 also suffers the disadvantage that, when the rectangular cell 901 expands, the bolt 906 will come in contact with the side face of the rectangular cell 901. This is because, when the rectangular cell 901 expands and the auricular projection 908 bends inwardly, the bolt 906 inserted through the auricular projection 908 is curved inwardly. In the layered rectangular cells, there exists a potential difference between the adjacent outer casings. Because of this state, when the bolt comes in contact with the casings of a plurality of rectangular cells, a short circuit current will flow to cause harm to the cells as well as causing reduced safety of the cells.

Battery packs, in which layered cells are fixed by means of a metal strap instead of the bolt, are described in JP-H5-343105A (1993) and JP2001-507856T.

JP-H5-343105A (1993) describes a battery pack in which a metal bar is provided on opposite surfaces of layered rectangular cells, so that opposing ends of a metal strap are fixed to the metal bar by means of a set screw. In the battery pack thus structured, an expansion of the rectangular cells is likely to deform the metal bar, and it is difficult to securely inhibit the expansion of the rectangular cells and securely inhibit a reduced performance of the cells. Further, JP2001-507856T describes a battery pack in which a pair of end plates are provided on opposite surfaces of layered rectangular cells, so that a metal bar is fixed to the end plates by means of welding. Such battery pack suffers a drawback that it is difficult to adjust and fix the rectangular cells in an accurately compressed state, because the metal bar is fixed by means of welding.

### SUMMARY OF THE INVENTION

The present invention has been made with a view to overcome the drawbacks found in the conventional types of battery packs as described above. It is the primary object of the present invention to provide a battery pack in which layered rectangular cells are fixed in an ideal state so that a reduced performance of the cells in use can be prevented.

In order to achieve the above-mentioned object, the battery pack of the present invention is constituted as described below.
The battery pack includes a battery block 3, in which a plurality of electric cells 1 being rectangular cells are layered, and a fixture component 4, 24, 34, 44, 54, 64, 74, 84, 94, 104 for fixing the electric cells 1 constituting the battery block 3. The fixture component 4, 24, 34, 44, 54, 64, 74, 84, 94, 104 includes a pair of end plates 5, 25, 35, 45, 55, 65, 75, 85, 95, 105, disposed at opposite end faces of the layered rectangular cells, and a metal strap 6, 26, 36, 46, 56, 66, 76, 86, 96, 106 for fixing, in a compressed state, the layered rectangular cells to the end plates 5, 25, 35, 45, 55, 65, 75, 85, 95, 105 by connecting at an end of the metal strap.

The above-described battery pack has the feature that the layered rectangular cells are fixed in an ideal state so as to be able to prevent a reduced performance of the cells in use. This is possible because the battery pack of the present invention is so constructed and arranged that the layered rectangular cells are fixed by means of a fixture component, which includes both a pair of end plates disposed on opposite end faces of the layered rectangular cells and a metal strap fixing the layered rectangular cells in a compressed state, with the folded portion at the tip of the metal strap being connected to the end plate. In the rectangular cells thus fixed in a layered state, an expansion is inhibited by the end plates at opposite sides. Thus, the drawback is eliminated that an expansion of the electrode increases the internal resistance to result in reduced output power.

In the battery pack of the present invention, the metal strap 6, 26, 36, 46, 56, 66, 76, 106 has a folded portion at the end thereof, and the folded portion can be connected to an outer side of the end plate 5, 25, 35, 45, 55, 65, 75, 105.

The battery pack thus structured need not be provided with an auricular projection that projects to the opposite sides of the rectangular cells, for connection of the metal strap, like in a conventional type of battery pack, so that it becomes possible to securely inhibit a short circuit that is caused either by an expansion of rectangular cells resulting from deformation of the auricular projection or by a contact of the metal strap with the rectangular cells.

In the battery pack of the present invention, the rectangular cell can be so structured as to accommodate, in a casing, an electrode having positive and negative electrode plates layered, and the casing can be so structured as to seal an opening of an outer casing 1A by means of a sealing plate 1 B which has positive and negative electrode terminals 10 as well as having an opening 11 for a safety valve. Further, the battery pack can be so constructed and arranged that the metal strap 6, 26, 36, 46, 56, 66, 76, 86, 96, 106 of the fixture component 4, 24, 34, 44, 54, 64, 74, 84, 94, 104 is disposed along opposite sides of the rectangular cells so as to connect the end of the strap to the end plate 5, 25, 35, 45, 55, 65, 75, 85, 95,105.

In this battery pack, the fixture component is not obstructive when gas coming out of an opened safety valve is exhausted outside, and is also not obstructive when a lead plate or a lead wire is connected to an output terminal. Therefore, while the layered rectangular cells are securely fixed by means of the fixture component, the gas coming out of the safety valve can be exhausted outside in an ideal state and also the lead plate or the lead wire can be electrically connected to the output terminal.

Further, in the battery pack of the present invention, the fixture component 4 includes a first metal strap 6A disposed along an upper end of the rectangular cell and a second metal strap 6B disposed along a lower end of the rectangular cell, so that the first metal strap 6A and the second metal strap 6B can have their ends connected to the upper and lower ends of the end plate 5.

A rectangular cell is prone to expand at its center portion, and is less likely to expand at the upper end fixed to the sealing plate and at the lower end which is a bottom of the outer casing. This is because, while the center portion expands by the curving effect of a metal plate occupying the largest area in the outer casing, the upper and lower ends expands by the elongating effect of a metal plate in the sealing plate or in the outer casing bottom. In this battery pack, the metal strap fixes, in a compressed state, the upper and lower ends of the rectangular cells having a smaller expansion. Therefore, even if an expansion power is effected in the rectangular cells, such expansion power does not affect the metal strap, so that there is no such elongation in the metal strap as may be caused by the expansion power effected in the rectangular cells. Resultantly, the metal strap does not suffer from a metal fatigue due to the strong expansion power effected in the rectangular cells, so that the rectangular cells layered during a long period of time is fixed in a compressed state as predetermined.

In the battery pack of the present invention, the metal strap 56, 66, 76, 86, 96 is in a folded state that the metal strap is folded into a rectangular shape so that a middle folded segment of the metal strap can be connected to one end plate 55A, 65A, 75A, 85A, 95A and both extremities of the metal strap can be connected to the other end plate 55B, 65B, 75B, 85B, 95B.

Such battery pack has the feature that the middle folded segment of the metal strap can be securely connected to the end plate.

Further, in the battery pack of the present invention, the metal strap 6 can be a metal sheet that is processed into a grooved form.

Such battery pack allows the metal strap to have greater bending strength. In addition, while the width is narrowed, the layered rectangular cells can be securely fixed in a compressed state as predetermined.

Further, in the battery pack of the present invention, a fitting-in positioner 9, 29, 89, 99 can be provided at the side face of the end plate 5, 25, 35, 45, 55, 65, 75, 85, 95, 105 so as to allow the metal strap 6, 26, 36, 46, 56, 66, 76, 86, 96, 106 to be inserted therein and disposed in place.

Such battery pack allows the metal strap to be connected to the end plate, without causing a positional displacement.

Further, in the battery pack of the present invention, the end of the metal strap 6, 26, 36, 46, 56, 66, 76, 86, 96, 106 can be connected to the end plate 5, 25, 35, 45, 55, 65, 75, 85, 95, 105 by any optional means of a bolt, nut, rivet or caulking structure.

Furthermore, in the battery pack of the present invention, a spacer 2, 22 can be interposed between the rectangular cells for allowing an air-blowing duct 15 to be provided by using the spacer 2, 22.

Such battery pack allows the electric cells to be efficiently cooled by sending air into the air-blowing duct. Particularly, in the battery pack in which the metal strap is disposed respectively at the upper and lower portions of the rectangular cells, the air is blown, without being hampered by the metal strap, into the center portion of the rectangular cells where a temperature is easier to rise, so that such portion can be efficiently cooled.
The above and further objects of the present invention as well as the features thereof will become more apparent from the following detailed description to be made in conjunction with the accompanying drawings.

### BRIEF DESCRIPTION OF THE DRAWINGS

Figure 1 is a top plan view of a conventional type of battery pack;
Figure 2 is a perspective view of the power supply unit provided with the battery pack in accordance with an embodiment of the present invention;
Figure 3 is a top plan view of the power supply unit shown in Figure 2;
Figure 4 is a perspective view of the battery pack in accordance with a first embodiment of the present invention;
Figure 5 is a perspective view of the battery pack in accordance with a second embodiment of the present invention;
Figure 6 is a perspective view showing the process of assembling the battery pack illustrated in Figure 5;
Figure 7 is a perspective view of the battery pack in accordance with a third embodiment of the present invention;
Figure 8 is a perspective view showing the process of assembling the battery pack illustrated in Figure 7;
Figure 9 is another perspective view showing the process of assembling the battery pack illustrated in Figure 7;
Figure 10 is a perspective view of the battery pack in accordance with a fourth embodiment of the present invention;
Figure 11 is a perspective view of the battery pack in accordance with a fifth embodiment of the present invention;
Figure 12 is an exploded perspective view showing the process of assembling the battery pack illustrated in Figure 11;
Figure 13 is a perspective view of the battery pack in accordance with a sixth embodiment of the present invention;
Figure 14 is a rear perspective view of the battery pack shown in Figure 13;
Figure 15 is a perspective view showing the process of assembling the battery pack illustrated in Figure 13;
Figure 16 is a perspective view of the battery pack in accordance with a seventh embodiment of the present invention;
Figure 17 is a perspective view of the battery pack in accordance with an eighth embodiment of the present invention;
Figure 18 is a perspective view showing the process of assembling the battery pack illustrated in Figure 17;
Figure 19 is a perspective view of the battery pack in accordance with a ninth embodiment of the present invention;
Figure 20 is a perspective view showing the process of assembling the battery pack illustrated in Figure 19;
Figure 21 is a perspective view of the battery pack in accordance with a tenth embodiment of the present invention;
Figure 22 is a perspective view showing the process of assembling the battery pack illustrated in Figure 21;
Figure 23 is a rear perspective view showing the process of assembling the battery pack illustrated in Figure 21;
Figure 24 is a perspective view showing the fixture component used for the battery pack illustrated in Figure 21;
Figure 25 is a rear perspective view of the fixture component shown in Figure 24; and
Figure 26 is a perspective view of the electric cell being the rectangular cell.

### DETAILED DESCRIPTION OF THE PREFERRED EMBODIMENT(S)

In a main though non-exclusive application, the battery pack of the present invention is suitable for a power supply unit that is mounted to an electric vehicle such as a hybrid car and an electric automobile so that electric power is supplied to a driving motor to drive the vehicle.

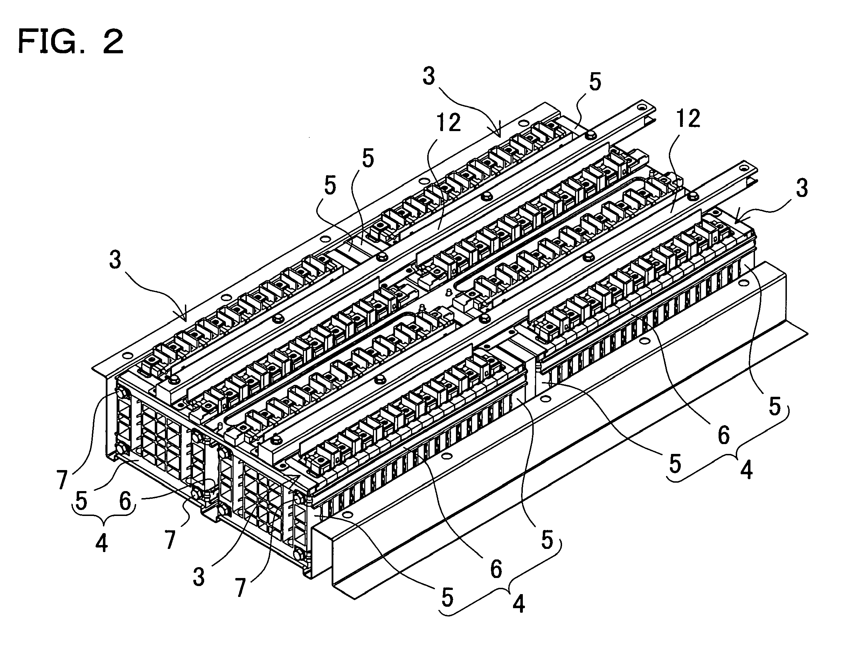

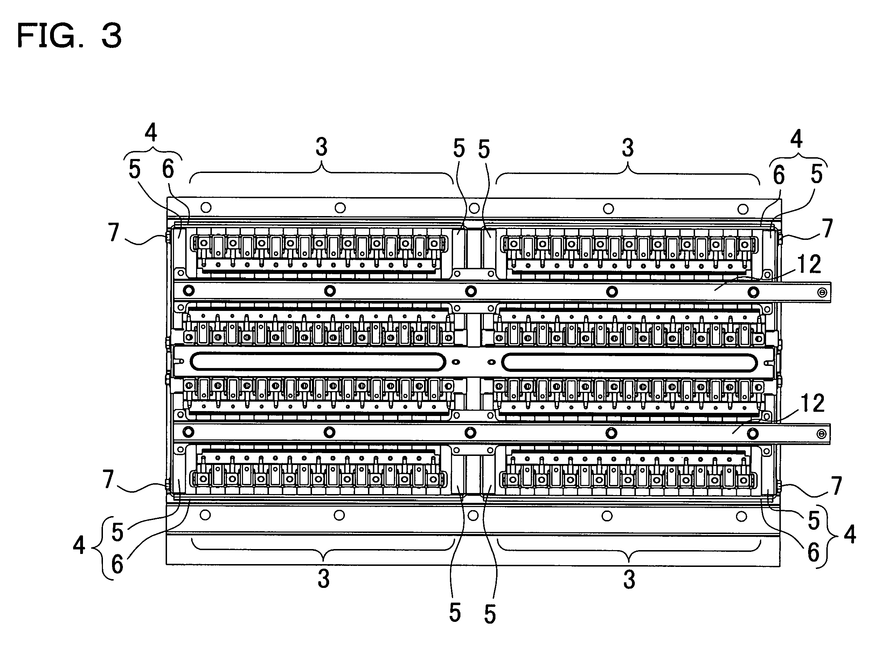

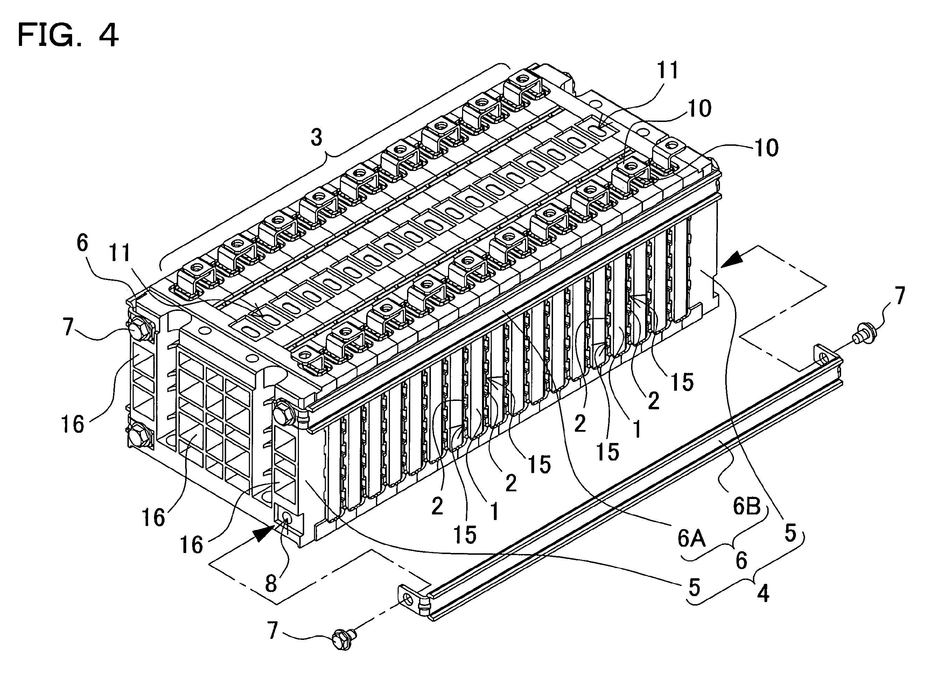

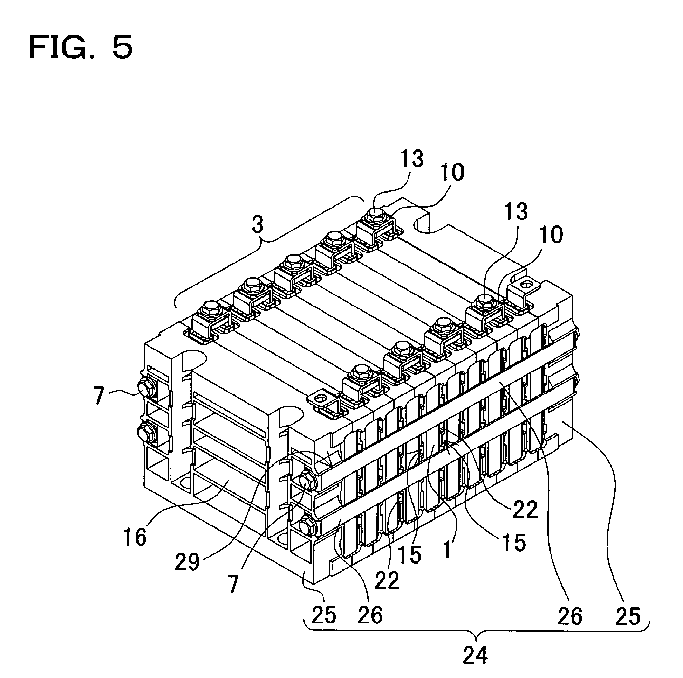

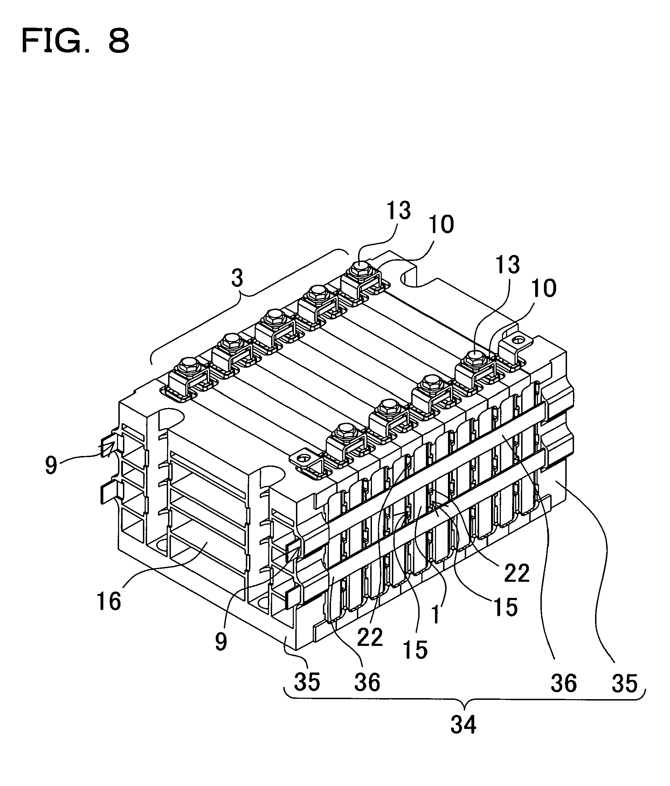

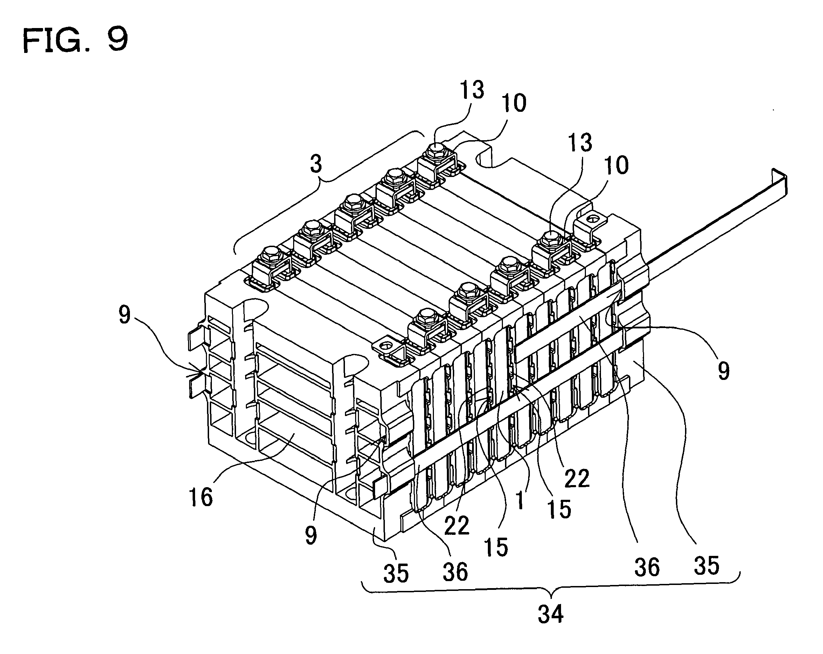

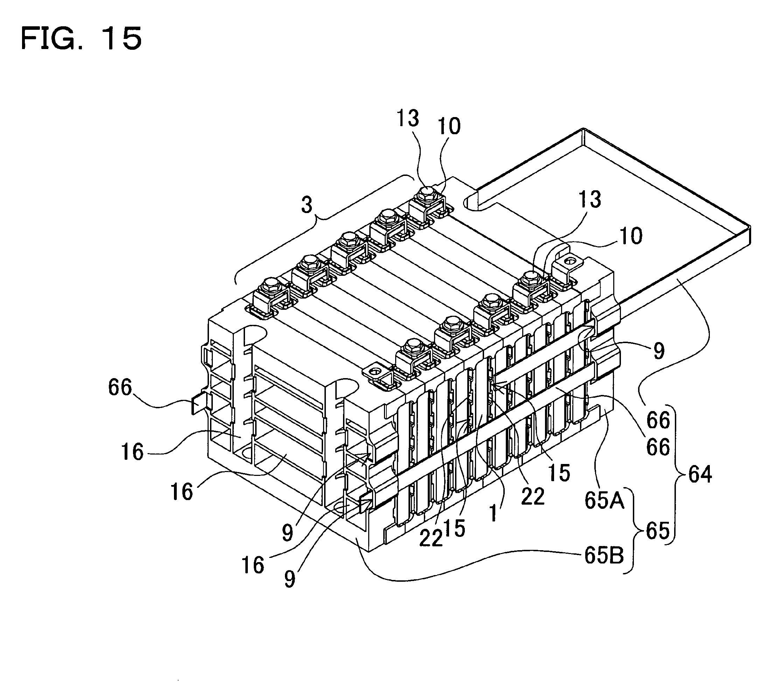

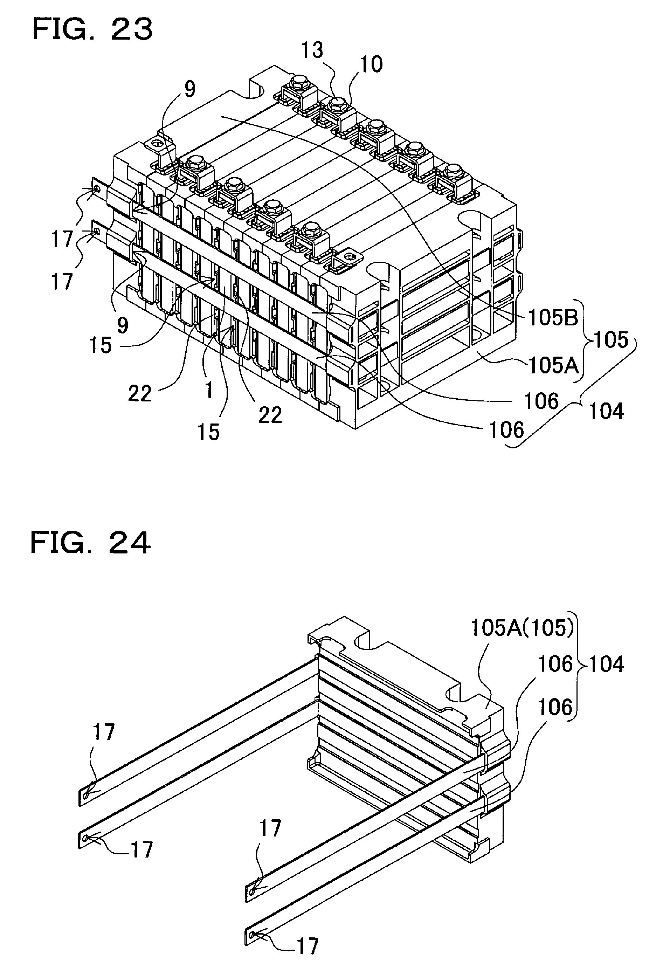

Figure 2 through Figure 4 are views showing the battery pack in accordance with an embodiment of the present invention. Figure 2 and Figure 3 show a power supply unit provided with four units of battery packs, the power supply unit being used for a vehicle , while Figure 4 is a perspective view of the battery pack that is to be incorporated in such power supply units. Further, Figure 5 through Figure 25 show the battery packs in accordance with alternative embodiments of the invention. However, in Figure 5 through Figure 25 respectively, a safety valve provided to the rectangular cells is not shown, for the purpose of simplifying the drawings.

The battery packs shown in these drawings respectively include a battery block 3 in which a plurality of electric cells 1 being rectangular cells, and a fixture component 4, 24, 34, 44, 54, 64, 74, 84, 94, 104 for fixing the electric cells 1 constituting the battery block 3.

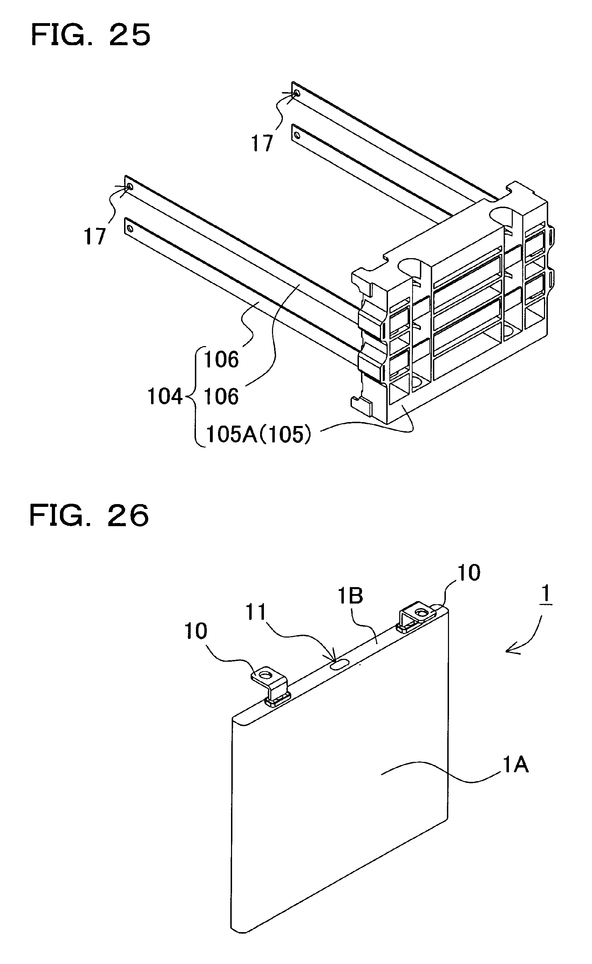

The electric cell 1 being the rectangular cell is a lithium-ion secondary cell. However, the rectangular cell is not specifically limited to the lithium-ion secondary cell but can be any available type of rechargeable cell, such as a nickel-hydrogen cell and the like. The rectangular cell is the one in which an electrode composed of layered positive and negative electrode plates is accommodated in a casing, in which an electrolytic solution is filled. The casing, as shown in Figure 26, is so designed as to seal an opening of an outer casing 1A by means of a sealing plate 1 B, the outer casing being formed to be a rectangular cylinder with its bottom being closed. The outer casing 1A is made by deep-drawing a metal sheet such as aluminum and aluminum alloy. The casing containing the layered rectangular cells is formed into a thin rectangular shape. The sealing plate 1 B as well is made of a metal sheet such as aluminum and aluminum alloy. In the sealing plate 1 B, positive and negative electrode terminals 10 are fixed through an insulation material to the opposite ends of the sealing plate. The positive and negative electrode terminals 10 are connected to the incorporated positive and negative electrode plates. In the case of a lithium-ion secondary cell, the outer casing 1A made of the metal sheet is not connected through a lead wire to the electrodes. However, since the outer casing 1A is connected through an electrolytic solution to the electrode, the outer casing bears a midpoint potential with respect to the positive and negative electrodes. However, in the case of the rectangular cell, one of the electrode terminals 10 may also be connected through the lead wire to one of the electrodes. In this rectangular cell, the electrode terminal 10 connected to the outer casing 1A can be fixed to the sealing plate 1 B, without being insulated. Further, the sealing plate 1 B is provided with an opening 11 for the safety valve. When an interior pressure existing within the casing becomes higher than a predetermined value, the safety valve opens to prevent the casing from being damaged. When the safety valve opens, the interior gas is exhausted to the outside through the opening 11 located at the sealing plate 1 B. In the illustrated rectangular cell, the sealing plate 1 B is provided with the opening 11 for the safety valve. The outer casing 1A is so designed as to allow the gas to be exhausted through the opening 11 of the safety valve which is opened. This operation occurs because the casing is full of the gas inside. In the rectangular cell, an opening for a safety value can also be provided at the bottom or side of the outer casing. However, in the case of such particular rectangular cell, an electrolytic solution is prone to be discharged when the safety valve is opened. The electrolytic solution is an electrically conductive liquid, and so when discharged, the solution is sometimes likely to cause a liquid-contacted portion to be short-circuited. The rectangular cell having the safety valve provided in the sealing plate 1 B at the casing can reduce the interior pressure by exhausting the gas through the safety valve being opened. Thus, when the safety valve is opened, a damage to be caused by the electrolytic solution can be reduced to minimum by limiting the exhaustion of the electrolytic solution.

In the power supply unit shown in Figure 2 and Figure 3, a vent duct 12 is provided atop of the battery pack so as to exhaust the gas, coming out of the safety valve, to the outside. The vent duct 12, with its lower opening being connected to the opening 11 for the safety valve, exhausts the gas coming out of the safety valve to the outside. This structure enables the gas, coming out of the rectangular cells, to quickly exhaust to the outside when the valve opens.

In the layered rectangular cells, the adjacent electrode terminals 10 are connected by means of a connector 13 so as to be interconnected in series. Further, a lead wire (not shown) is connected to the electrode terminal 10 in each of the rectangular cells. The lead wire is connected to a circuit board (not shown) on which a protection circuit is implemented for detecting a voltage of the cell. Although not shown, the circuit board is disposed superjacent to the battery pack, in Figure 4.

A spacer 2, 22 is interposed between the electric cells 1 being the rectangular cells. The spacer 2, 22 serves to insulate the outer casings 1 A of the adjacent rectangular cells, allowing an air-blowing duct 15 to be provided between the electric cells 1 so as to cool the cells. Therefore, the spacer 2, 22 is made by forming an insulation material such as plastics. The spacer 2, 22 is provided with a blower groove on opposite faces, and the air-blowing duct 15 is provided between the rectangular cells. The spacer 2, 22 is provided with the blower groove in a horizontal direction, namely such that the spacer is connected to the opposite sides of the rectangular cell. The air-blowing duct 15 provided in the spacer 2, 22 cools the rectangular cells by sending air in a horizontal direction.

The electric cells 1, being the rectangular cells, which are layered through the spacer 2, 22 are fixed in place by using the fixture component 4, 24, 34, 44, 54, 64, 74, 84, 94, 104. The fixture component 4, 24, 34, 44, 54, 64, 74, 84, 94, 104 includes a pair of end plates 5, 25, 35, 45, 55, 65, 75, 85, 95, 105 disposed on the opposite end faces of the layered rectangular cells, and a metal strap 6, 26, 36, 46, 56, 66, 76, 86, 96, 106, the end of which is connected so as to fix the layered rectangular cells to the end plates 5, 25, 35, 45, 55, 65, 75, 85, 95, 105 in a compressed state.

The end plate 5, 25, 35, 45, 55, 65, 75, 85, 95, 105 is made by forming a metal material such aluminum and aluminum alloy or by forming rigid plastics. The illustrated end plate 5, 25, 35, 45, 55, 65, 75, 85, 95, 105 is provided in an integral formation with stiffening ribs 16 extending vertically and horizontally on the outer side face. The end plate 5, 25, 35, 45, 55, 65, 75, 85, 95, 105 can be made greater in its bending strength by means of the stiffening ribs 16. The end plate with its excellent bending strength can effectively inhibit an expansion of the center portion of the rectangular cell. This is because, so long as the end plate connected to the metal strap is not deformed, the center portion of the rectangular cell does not expand. In the end plate 5, 25, 35, 45, 55, 65, 75, 85, 95, 105, its external contour is designed to be of a rectangular shape similar to the electric cell 1 being the rectangular cell so as to interpose the rectangular cell in a wide area. The rectangular end plate 5, 25, 35, 45, 55, 65, 75, 85, 95, 105 is designed to be of the same size as the rectangular cell or to be slightly larger than the rectangular cell. Further, the illustrated end plate 5, 25, 35, 45, 55, 65, 75, 85, 95, 105 is provided with the blower groove on the surface opposite to the electric cell 1 and is provided with the air-blowing duct 15 with respect to the rectangular cells. The end plate may, however, be made planar in its surface opposite to the electric cell, so as to be in surface contact with the rectangular cell or with the spacer. A plastic-made end plate is layered directly on the rectangular cell, while a metal-made end plate is layered through a laminate on the rectangular cell.

Connected to the end plate 5, 25, 35, 45, 55, 65, 75, 85, 95, 105 is the end of the metal strap 6, 26, 36, 46, 56, 66, 76, 86, 96, 106. The metal strap 6, 26, 36, 46, 56, 66, 76, 86, 96, 106 is connected through the set screw 7 to the end plate 5, 25, 45, 55, 75, 105, or is connected to the end plate 35, 65 by folding the strap end inwardly, or alternatively is connected to the end plate 85, 95 by screwing the nut 87 on the end of the metal strap 86 or by caulking the end of the metal strap 96. The end plate 5, 25, 45, 55, 75, 105, to which the metal strap 6, 26, 46, 56, 76, 106 is connected by means of the set screw 7, is formed of an internally threaded hole 8 into which the set screw 7 is screwed. The internally threaded hole 8 is defined on the outer surface of the end plate 5, 25, 45, 55, 75, 105, so that the metal strap 6, 26, 46, 56, 76, 106 is connected by screwing the set screw 7 which extends through the folded portion of the metal strap 6, 26, 46, 56, 76, 106.

In the battery pack shown in Figure 4, the first metal strap 6A disposed along the upper end of the rectangular cells and the second metal strap 6B disposed along the lower end of the rectangular cells are connected to the end plates 5. In this battery pack, the internally threaded holes 8 are respectively defined on the upper and lower ends of the end plates, namely on the opposite sides of the outer surface. In the battery pack, the upper and lower portions of the rectangular cells are respectively fixed by means of the metal straps 6. As shown in Figure 5 through Figure 24, the battery pack may also be so designed as to dispose the metal strap 26, 36, 46, 56, 66, 76, 86, 96, 106 intermediate to the upper and lower portions, namely above and below the center portion. The end plate 25, 45, 55, 75, 105 for fixing the end of the metal strap 26, 46, 56, 76, 106 by means of the set screw 7 is formed of the internally threaded hole 8 defined at the connection point of the metal strap 26, 46, 56, 76, 106.

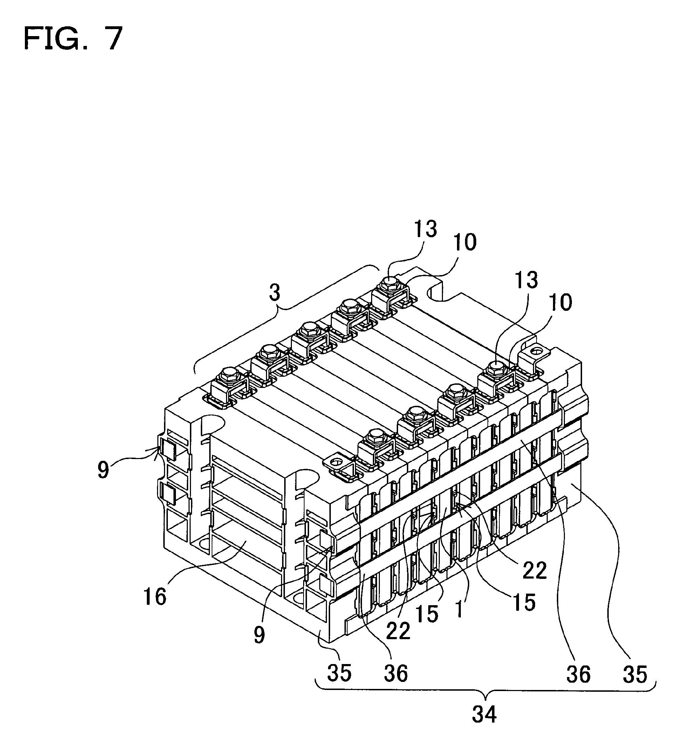

Like in the case of the battery pack shown in Figure 7 through Figure 9, the end plate 35 for fixing the end of metal strap 36 which is folded inwardly need not be formed of an internally threaded hole. In this end plate 35, a fitting-in positioner 9 for connecting the end of the metal strap 36 in place is provided on the side face of the end plate. The fitting-in positioner 9, being provided on the side face of the end plate 35, allows the metal strap 36 to be inserted through the fitting-in positioner by using the through hole which allows the metal strap 36 to be inserted through, so that the metal strap 36 is connected at the fitting-in positioner in place. The metal strap 36 inserted through here has its end folded inwardly to be connected to the end plate 35.

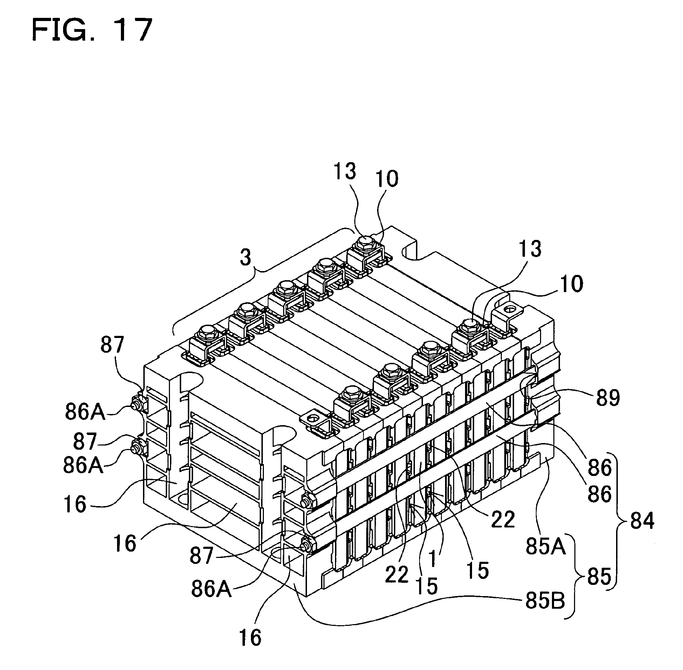

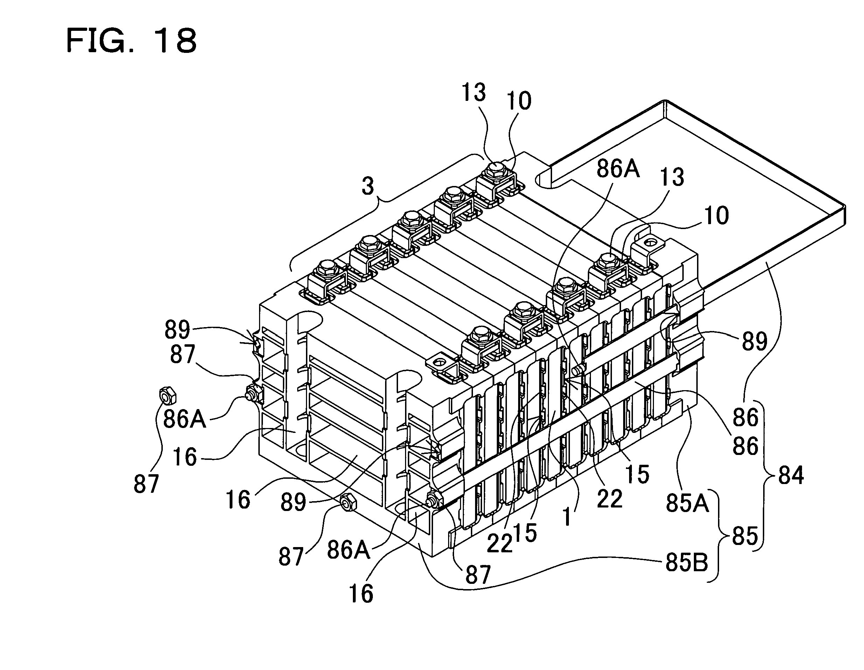

Further, in the battery pack shown in Figure 17 and Figure 18, the threaded portion 86A provided at the tip of the metal strap 86 is inserted through and connected to the end plate 85 by screwing a nut 87 on the threaded portion 86A. The end plate 85 is provided with a fitting-in positioner 89 for the through hole disposed by inserting the metal strap 86 therethrough to be disposed in place, so that the metal strap 86 is connected to the end plate 85 by screwing the nut 87 on the threaded portion 86A protruding toward the outer side.

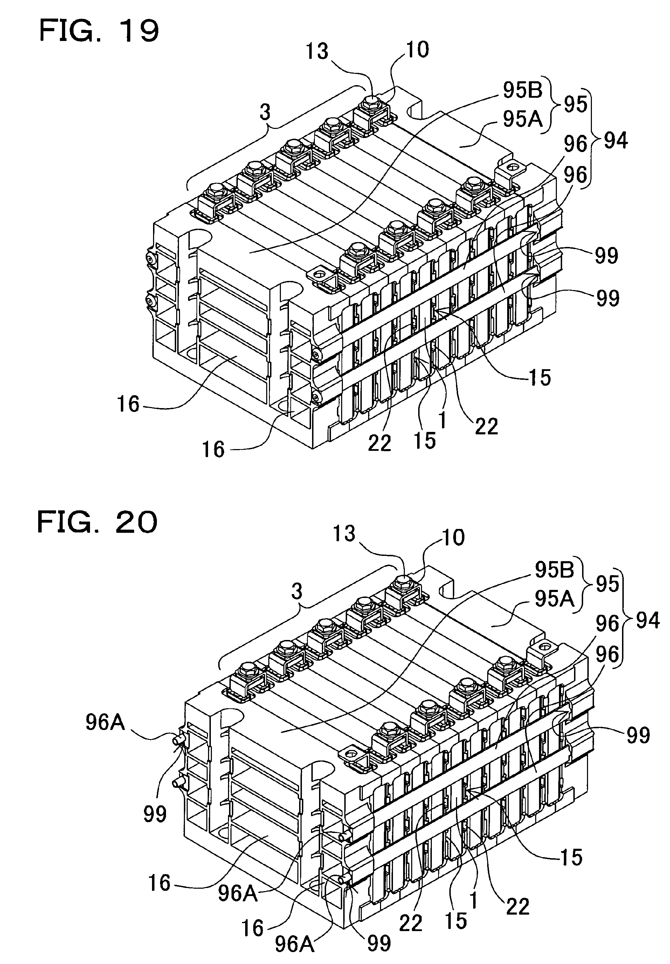

Further, in the battery pack shown in Figure 19 and Figure 20, a caulking portion 96A provided at the tip of the metal strap 96 is inserted through the end plate, and the metal strap 96 is connected to the end plate 95 by caulking such that the opening tip of the caulking portion 96A is expanded. The end plate 95 is provided with a fitting-in positioner 99 for the through hole which is disposed in place by inserting the metal strap 96 through the hole, so that the caulking portion 96A protruding toward the outer side of the fitting-in positioner is caulked to connect the metal strap 96 to the end plate 95.

The end plate 25, 35, 45, 55, 65, 75, 85, 95, 105 is provided, at its side, with the fitting-in positioners 9, 29, 89, 99 for allowing the metal strap 26, 36, 46, 56, 66, 76, 86, 96, 106 to be disposed in place. These fitting-in positioners 9, 29, 89, 99 are designed to be the fitting grooves for allowing the metal strap 26, 56 to be fitted in as shown in Figure 5, Figure 6, Figure 11 and Figure 12, or are designed to be the through holes for allowing the metal strap 36, 46, 66, 76, 86, 96, 106 to be inserted through as shown in Figure 7 through Figure 10 and Figure 13 through Figure 25, so that the metal strap 26, 36, 46, 56, 66, 76, 86, 96, 106 is disposed in place. The fitting-in positioner 9, 89, 99 for the through hole can fix the metal strap 36, 46, 66, 76, 86, 96, 106 in place in a manner that the metal strap is not displaced from the side face of the end plate 35, 45, 65, 75, 85, 95, 105. Therefore, the fitting-in positioner 9 for the through hole is suitable for the end plate 35, 65 being so structured as to fold the tip of the metal strap 36, 66 inwardly for connection. This is because the fitting-in positioner 9 can arrange the folded metal strap 36, 66 not to be displaced from the end plate 35, 65. Further, the fitting-in positioner 29 as the fitting groove is suitable for a structure that the set screw 7 is inserted through the through hole 17 at the folded portion at the tip of the metal strap 26, 56 and the set screw 7 is screwed into the internally threaded hole 8 of the end plate 25, 55. This is because the metal strap 26, 56 fixed by means of the set screw 7 is not displaced sideways from the end plate 25, 55.

The metal strap 6, 26, 36, 46, 56, 66, 76, 86, 96, 106 is made by cutting a metal sheet of a given thickness to a given width. The metal strap 6, 26, 36, 46, 56, 66, 76, 86, 96, 106 has its ends connected to the end plate 5, 25, 35, 45, 55, 65, 75, 85, 95, 105, so that a pair of end plates 5, 25, 35, 45, 55, 65, 75, 85, 95, 105 are interconnected to hold the rectangular cells between them in a compressed state. The metal strap 6, 26, 36, 46, 56, 66, 76, 86, 96, 106 fixes the pair of end plates 5, 25, 35, 45, 55, 65, 75, 85, 95, 105 in a given size to fix the rectangular cells layered between them in a compressed state as predetermined. When the metal strap 6, 26, 36, 46, 56, 66, 76, 86, 96, 106 is elongated under the effect of an expansion pressure of the rectangular cells, it becomes impossible to inhibit an expansion of the rectangular cells. Therefore, the metal strap 6, 26, 36, 46, 56, 66, 76, 86, 96, 106 is made by processing a metal sheet of a strength that would not be elongated by the expansion pressure of the rectangular cells, i.e., a metal sheet like a stainless steel sheet and a steel sheet, including SUS304, to a width and thickness having a sufficient strength. Further, in the metal strap 6 shown in Figure 4, a metal sheet is processed into a grooved form. The metal strap 6 thus formed has the feature that its bending strength can be made greater so that the layered rectangular cells, with its narrower width, can be securely fixed in a compressed state as predetermined.

The metal strap 6, 26, 36, 46, 56, 66, 76, 86, 96, 106 is provided, at its end, with a folded portion, and the folded portion is connected to the end plate 5, 25, 35, 45, 55, 65, 75, 85, 95, 105. The folded portion is connected to the end plate 5, 25, 35, 45, 55, 65, 75, 85, 95, 105 by being formed of the through hole 17 for the set screw 7 or without being formed of such through hole. The folded portion defining the through hole 17 is connected by screwing the set screw 7, being inserted through the through hole 17, to the internally threaded hole 8 in the end plate 5, 25, 45, 55B, 75B, 105B. The folded portion devoid of the through hole is folded inwardly to be connected to the end plate 35, 65. It should be noted, however, that, as described above, the metal strap 86, 96 can also be connected to the end plate 85, 95 by being provided, at the strap end, with the threaded portion 86A or the caulking portion 96A.

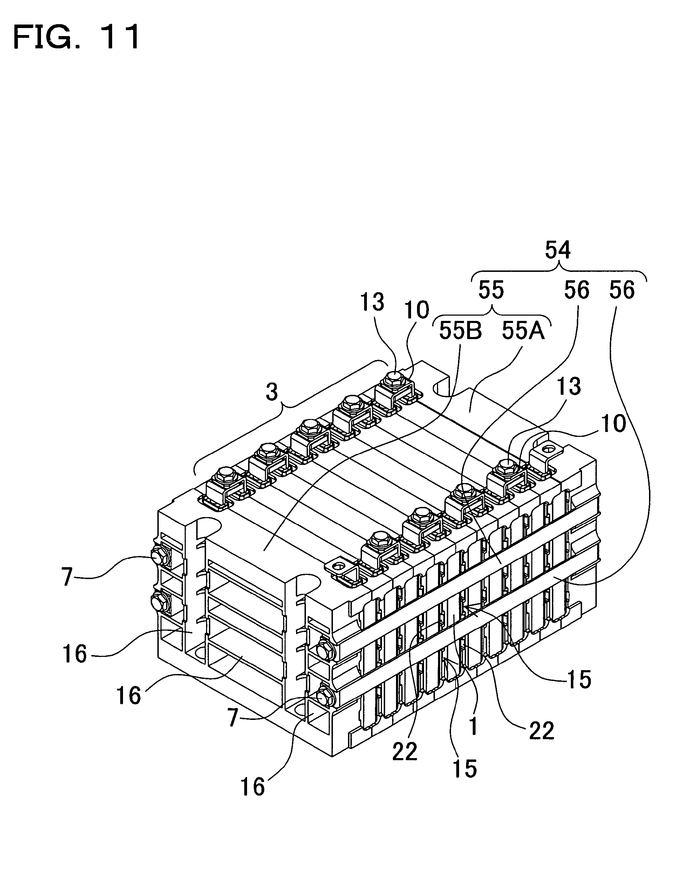

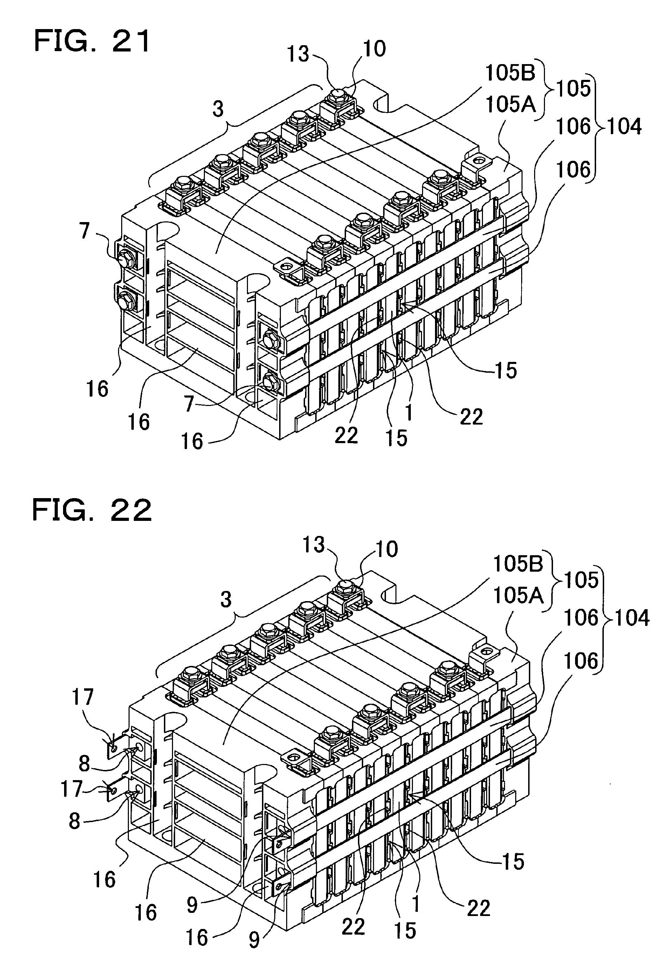

In the metal strap 56, 66, 76, 86, 96, as shown in Figure 11 through Figure 20, it is also possible that the metal strap is folded into a rectangular shape so that the middle folded segment of the metal strap is connected to the outer surface of one end plate 55A, 65A, 75A, 85A, 95A and both extremities of the metal strap are connected to the other end plate 55B, 65B, 75B, 85B, 95B. In such metal strap 56, 66, 76, 86, 96, the middle folded segment can be securely connected to the one end plate 55A, 65A, 75A, 85A, 95A. Further, the metal strap 106, as shown in Figure 21 through Figure 25, can also be fixed integrally with the end plate 105A. Such metal strap 106 can be connected to the one end plate 105A in the most firm manner.

The above-described battery pack is assembled in the following procedure.
The battery pack shown in Figure 2 through Figure 6 is assembled in the following procedure.

### Process of Compressing the Battery Block

The spacer 2, 22 is disposed between the electric cells 1 being the rectangular cells, then the spacer 2, 22 and the rectangular cells are layered to form the battery block 3, and the end plate 5, 25 is disposed on opposite sides of the battery block 3. In this state, the end plates 5, 25 on opposite sides are pressed by using a jig and are compressed until the interval of the end plates 5, 25 reaches a given size and is held in such state.

### Process of Connecting the Metal Strap

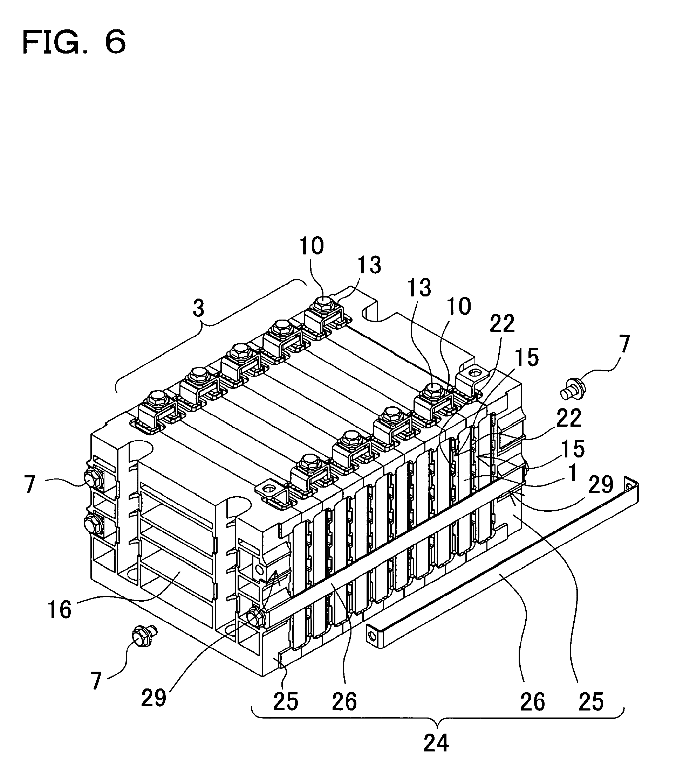

With the battery block 3 being held in its compressed state, the opposite ends of the metal strap 6, 26 are fixed to the end plate 5, 25. The illustrated metal strap 6, 26 is provided, at its opposite ends, with the folded portions defining the through hole 17. The metal strap 6, 26 is fixed to the end plate 5, 25 by screwing the set screw 7, being inserted through the through hole 17 at the folded portion, into the internally threaded hole 8 in the end plate 5, 25. Further, in the battery pack shown in Figure 5 and Figure 6, the metal strap 26 is fitted in the fitting-in positioner 29 at the fitting-in groove provided on opposite sides of the end plate 25 and is disposed in place.

### Process of Removing from the Jig

All the metal straps 6, 26 are removed from the jig after being fixed to the end plate 5, 25.
Through the above procedures, the layered rectangular cells are held in the compressed state by means of the pair of end plates 5, 25. Therefore, even when the rectangular cell tends to expand through an overcharging operation or the like, the interval between the opposite end plates 5, 25 remains unchanged, so that the expansion of the rectangular cells is inhibited by the end plates 5, 25. In this battery pack, since the opposite ends of the metal strap 6, 26 are fixed to the end plates 5, 25 by means of the set screw 7, the metal strap 6, 26 can be firmly fixed to the end plate 5, 25, and the metal strap 6, 26 allows the end plate 5, 25 to be held in a given size.

The battery pack shown in Figure 7 through Figure 9 is assembled in the following procedure.

### Process of Compressing the Battery Block

Like in the case of the battery pack shown in Figure 4 through Figure 6, the spacer 22 and the electric cells 1 being the rectangular cells are layered and the opposite end plates 35 are pressed by using a jig, being compressed until the interval of the end plates 35 reaches a given size and is held in such state. Process of Connecting the Metal Strap
With the battery block 3 being held in its compressed state, the opposite ends of the metal strap 36 are fixed to the end plate 35. The illustrated metal strap 36 is provided, at its opposite ends, with the folded portions devoid of a through hole. The metal strap 36 is inserted through the fitting-in positioner 9 for the through hole defined on opposite sides of the end plate 35, with a folded portion being provided on one side only or without a folded portion being provided on the opposite sides. The end of the metal strap 36 thus inserted is folded inwardly, such folded portion is kept in close contact with the outer surface of the end plate 35, and the metal strap 36 is connected to the end plate 35. In this metal strap 36, it is also possible that the folded portion is provided on one side, the tip of the metal strap 36 devoid of a folded portion is inserted through the fitting-in positioner 9 for the through hole, and the straight tip devoid of a folded portion is folded inwardly to be connected to the end plate 35. Process of Removing from the Jig
The metal strap 36 is removed from the jig after being fixed to the end plate 35.
Through the above procedures, the layered rectangular cells are held in a compressed state by means of the pair of end plates 35. In the case of this battery pack as well, even if the rectangular cell tends to expand through an overcharging operation or the like, the interval between the opposite end plates 35 remains unchanged, so that the expansion of the rectangular cells can be inhibited by the end plates 35. In this battery pack, since the opposite ends of the metal strap 36 can be fixed to the end plate 35 by folding the end of the metal strap 36, the metal strap 36 can be readily fixed to the end plate 35.

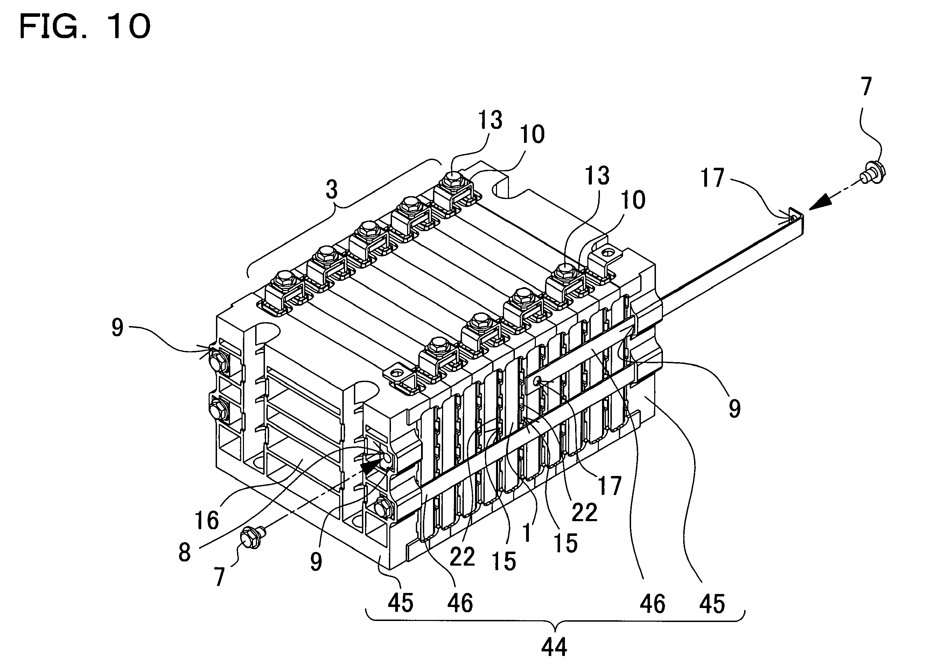

The battery pack shown in Figure 10 is assembled in the same manner as the battery pack shown in Figure 7 through Figure 9, except that, after the tip of the straight metal strap 46 devoid of a folded portion is inserted through the fitting-in positioner 9 for the through hole defined in the end plate 45, the strap is folded to form a folded portion, so that the set screw 7 is inserted through the through hole for such folded portion, the set screw 7 is screwed into the internally threaded hole 8 of the end plate 45, and the metal strap 46 is fixed to the end plate 45.

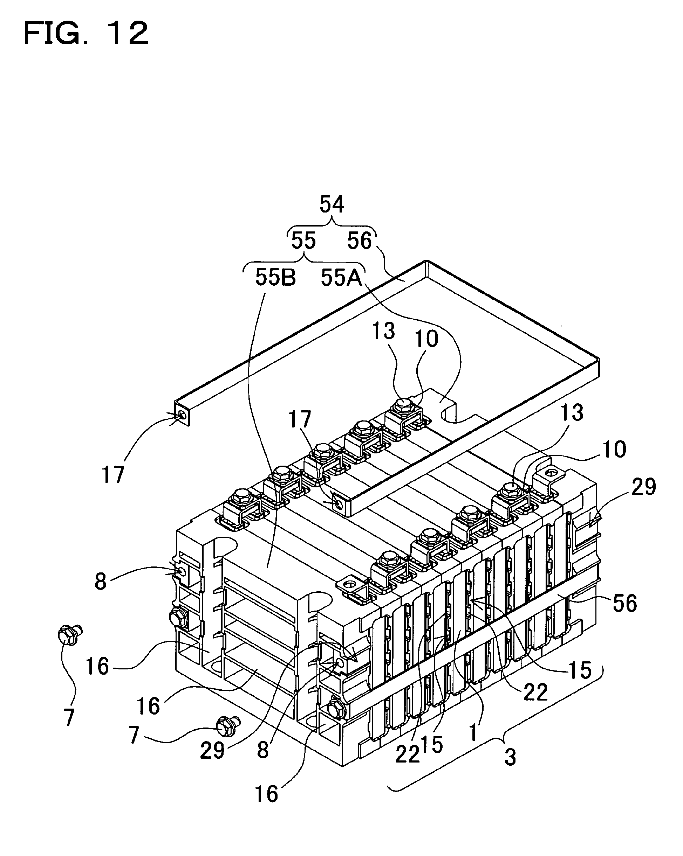

In the battery pack shown in Figure 11 and Figure 12, the pair of end plates 55 is pressed by means of a jig to hold the battery block 3 in its compressed state, and the tip of the metal strap 56 is connected to one end plate 55B, for assembly. The metal strap 56 is folded in a manner where the metal strap is folded into a rectangular shape, and the metal strap is provided with the folded portion defining the through hole on opposite ends. In this metal strap 56, the folded portion is disposed on the outer side of the other end plate 55A, while the portion is fitted in the fitting-in positioner 29 for the fitting groove being provided on the opposite sides of the end plate 55 to be disposed in place. In this state, the folded portion on the opposite ends is fixed to one end plate 55B by means of the set screw 7. In this battery pack, the pair of end plates 55 can be firmly fixed by using two pieces of metal straps 56.

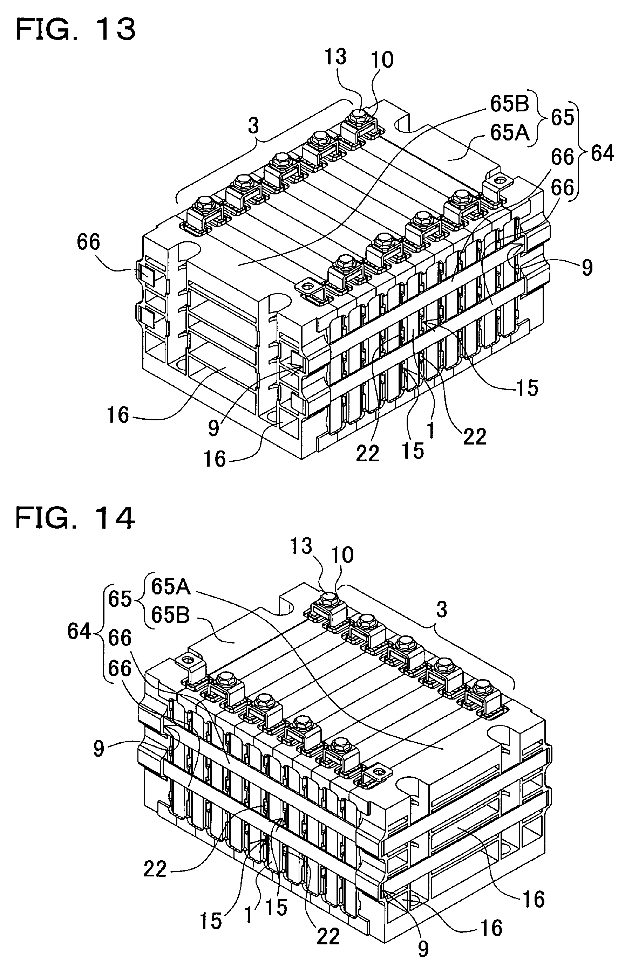

In the battery pack shown in Figure 13 through Figure 15, the pair of end plates 65 are pressed by means of a jig to hold the battery block 3 in its compressed state, and the tip of the metal strap 66 is connected to one end plate 65B, for assembly. The metal strap 66 is folded in a manner where the metal strap is folded into a rectangular shape, but the opposite ends in a straight state devoid of a folded portion is connected to the end plate 65. The metal strap 66 is inserted through the through hole for the fitting-in positioner 9 being defined on the opposite sides of the end plate 65B, and the folded portion is disposed to the outer side of the other end plate 65A. Further, in this state, the straight tip of the metal strap 66 is allowed to protrude from the through hole for the fitting-in positioner 9, such protrusion is folded inwardly to be fixed to one end plate 65B at the folded portion. In this battery pack as well, the pair of end plate 65 can be firmly fixed by two pieces of the metal straps 66.

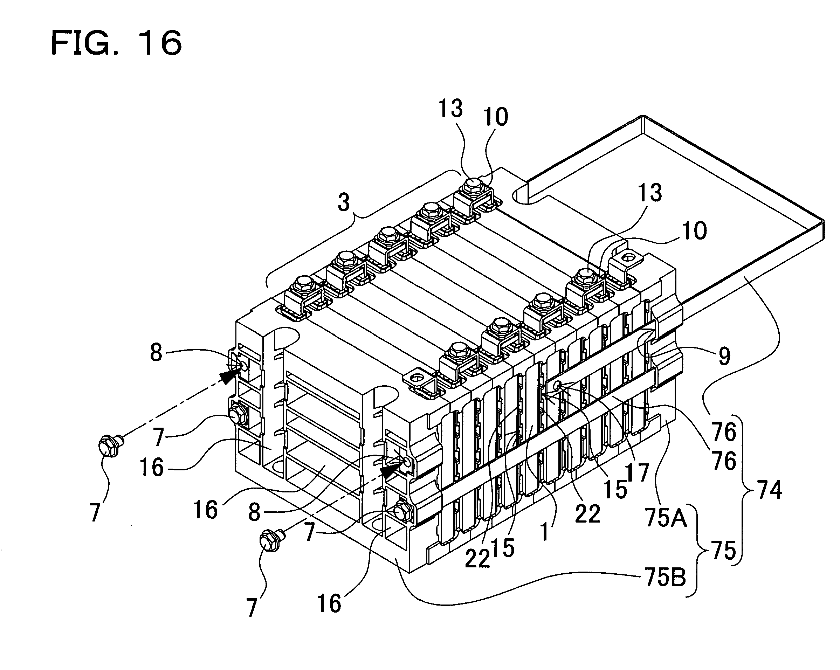

Further, in the battery pack shown in Figure 16, the pair of end plate 75 is pressed by means of a jig to hold the battery block 3 in its compressed state, and the tip of the metal strap 76 is connected to one end plate 75B, for assembly. The metal strap 76 is folded in a manner where the metal strap is folded into a rectangular shape, but the opposite ends in a straight state devoid of a folded portion is connected to the end plate 75. The metal strap 76 is inserted through the through hole for the fitting-in positioner 9 being defined on the opposite sides of the end plate 75, and the folded portion is disposed to the outer side of the other end plate 75A. Further, in this state, the straight tip of the metal strap 76 is allowed to protrude from the through hole for the fitting-in positioner 9, such protrusion is folded inwardly to form the folded portion, so that the set screw 7 is inserted through the through hole 17 (defined in advance) of this folded portion and the metal strap is fixed to one end plate 75B by means of the set screw 7. In this battery pack as well, the pair of end plates 75 can be firmly fixed by two pieces of the metal strap 76.

The battery pack shown in Figure 17 and Figure 18 is assembled in the same manner as in the battery pack shown in Figure 13 through Figure 15, except that the threaded portion 86A is provided at the tip of the metal strap 86 and the nut 87 is screwed onto the threaded portion 86A to connect the metal strap 86 to the end plate 85B. It should be noted, however, that the fitting-in positioner 89 for the through hole defined on the opposite sides of the end plate 85 is of an interior contour for allowing the tip of the metal strap 86 having the threaded portion 86A to be inserted through. After the threaded portion 86A at the tip of the metal strap 86 is inserted through the through hole for the fitting-in positioner 89, the nut 87 is screwed onto the threaded portion 86A to fix the metal strap 86 to the end plate 85.

The battery pack shown in Figure 19 and Figure 20 is assembled in the same manner as in the battery pack shown in Figure 13 through Figure 15, except that a caulking portion 96A is provided at the tip of the metal strap 96, and the caulking portion 96A is caulked such that the opening tip of the caulking portion 96A is expanded to connect the metal strap 96 to the end plate 95. It should be noted, however, that the fitting-in positioner 99 for the through hole defined on the opposite sides of the end plate 95 is of an interior contour for allowing the tip of the metal strap 96 having the caulking portion 96A to be inserted through. After the caulking portion 96A at the tip of the metal strap 96 is inserted through the through hole for the fitting-in positioner 99, the caulking portion 96A is caulked to connect the metal strap 96 to the end plate 95.

Further, in the battery pack shown in Figure 21 through Figure 25, the metal strap 106 is integrally connected to one end plate 105A. This battery pack is assembled in the following procedure.

### Process of Compressing the Battery Block

The spacer 22 is disposed between the electric cells 1 being the rectangular cells, the spacer 22 and the rectangular cells are layered to form the battery block 3, and the end plates 105 are disposed on the opposite sides of the battery block 3. At this stage, the metal strap 106 connected to one end plate 105A is inserted through the through hole being the fitting-in positioner 9 for the other end plate 105B. The metal strap 106 connected to the end plate 105 is in a straight form without folding the tip. In this state, the end plates 105 on the opposite sides are pressed by means of a jig to hold the end plates in their compressed state until the interval between the end plates 105 reaches a given size.

### Process of Connecting the Metal Strap

With the battery block 3 being held in its compressed state, the tip of the metal strap 106 protruding from the through hole for the fitting-in positioner is folded inwardly, and such folded portion is allowed to be in close contact with the outer side of the end plate 105B. In the metal strap 106, the through hole 17 is defined in advance so as to be positioned at the folded portion. The set screw 7 is inserted through the through hole 17 at the folded portion, and the set screw is screwed into the internally threaded hole 8 in the end plate 105B, so that the tip of the metal strap 106 is fixed to the end plate 105B.

### Process of Removing from the Jig

The opposite ends of the metal strap 106 are removed from the jig after being fixed to the end plate 105.
Through the above procedure, the layered rectangular cells are held in their compressed state by means of the pair of end plates 105. Therefore, even if the rectangular cell tends to expand through an overcharging operation or the like, the interval between the opposite end plates 105 remains unchanged, so that the expansion of the rectangular cells is inhibited by the end plates 105. In this battery pack, since the opposite ends of the metal strap 106 is fixed to the end plate 105B by means of the set screw 7, the metal strap 106 is firmly fixed to the end plate 105 for allowing the end plate 105 to be held by the metal strap in a given size. It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Application No. 2007-123686 filed in Japan on May 8, 2007, the content of which is incorporated herein by reference.
- 1: Electric Cell
- 1A: Outer Casing
- 1B: Sealing Plate
- 2: Spacer
- 3: Battery Block
- 4: Fixture Component
- 5: End Plate
- 6: Metal Strap
- 6A: First Metal Strap
- 6B: Second Metal Strap
- 7: Set Screw
- 8: Internally Threaded Hole
- 9: Fitting-in Positioner
- 10: Electrode Terminal
- 11: Opening
- 12: Vent Duct
- 13: Connector
- 15: Air-Blowing Duct
- 16: Stiffening Rib
- 17: Through Hole
- 22: Spacer
- 24: Fixture Component
- 25: End Plate
- 26: Metal Strap
- 29: Fitting-in Positioner
- 34: Fixture Component
- 35: End Plate
- 36: Metal Strap
- 44: .Fixture Component
- 45: End Plate
- 46: Metal Strap
- 54: Fixture Component
- 55: End Plate
- 55A: End Plate
- 55B: End Plate
- 56: Metal Strap
- 64: Fixture Component
- 65: End Plate
- 65A: End Plate
- 65B: End Plate
- 66: Metal Strap
- 74: Fixture Component
- 75: End Plate
- 75A: End Plate
- 75B: End Plate
- 76: Metal Strap
- 84: Fixture Component
- 85: End Plate
- 85A: End Plate
- 85B: End Plate
- 86: Metal Strap
- 86A: Threaded Portion
- 87: Nut
- 89: Fitting-in Positioner
- 94: Fixture Component
- 95: End Plate
- 95A: End Plate
- 95B: End Plate
- 96: Metal Strap
- 96A: Caulking Portion
- 99: Fitting-in Positioner
- 104: Fixture Component
- 105: End Plate
- 105A: End Plate
- 105B: End Plate
- 106: Metal Strap
- 901: (Rectangular) Electric Cell
- 905: End Plate
- 906: Bolt
- 907: Nut
- 908: Auricular Projection

## Claims

1. A battery pack comprising:
a battery block (3) having a plurality of electric rectangular cells (1) which are layered; and
a fixture component (4, 24, 34, 44, 54, 64, 74, 84, 94, 104) for fixing the cells (1) in the battery block (3),
**characterized in that**
the fixture component (4, 24, 34, 44, 54, 64, 74, 84, 94, 104) further comprises a pair of end plates (5, 25, 35, 45, 55, 65, 75, 85, 95, 105) disposed at opposite end faces of the layered rectangular cells (1); and
a metal strap (6, 26, 36, 46, 56, 66, 76, 86, 96, 106) for fixing the rectangular cells (1) in a compressed state to form a layered state by connecting the end plates (5, 25, 35, 45, 55, 65, 75, 85, 95, 105) at an end thereof.

2. The battery pack as recited in claim 1, **characterized in that** the rectangular cell (1) comprises:
an electrode assembly having positive and negative electrode plates being layered;
a casing (1A) to accommodate the electrode assembly; and
a sealing plate (1 B) having positive and negative electrode terminals (10) and defining an aperture (11) to be a safety valve, the sealing plate (1 B) sealing the opening of the casing (1A), **characterized in that** the metal strap (6, 26, 36, 46, 56, 66, 76, 86, 96, 106) of the fixture component (4, 24, 34, 44, 54, 64, 74, 84, 94, 104) is disposed along opposite sides of the rectangular cells (1) so as to connect the end of the metal strap (6, 26, 36, 46, 56, 66, 76, 86, 96, 106) to the end plate(5, 25, 35, 45, 55, 65, 75, 85, 95, 105).

3. The battery pack as recited in claim 2, **characterized in that** the rectangular cell (1) is a lithium-ion secondary cell.

4. The battery pack as recited in any of claims 1-3, **characterized in that** a spacer (2, 22) is interposed between the rectangular cells (1), and that an air-blowing duct (15) is provided by utilizing the spacer (2, 22).

5. The battery pack as recited in any of claims 1-4, **characterized in that** the metal strap (6, 26, 36, 46, 56, 66, 76, 106) has a folded portion at the end thereof, and that the folded portion is connected to an outer side of the end plate (5, 25, 35, 45, 55, 65, 75, 105).

6. The battery pack as recited in any of claims 1-5, **characterized in that** the metal strap comprises a first metal strap (6A) disposed along an upper end of the rectangular cell (1) and a second metal strap (6B) disposed along a lower end of the rectangular cell (1), so that the first and second metal straps (6A, 6B) have the end thereof connected to the end plate (5) at upper and lower ends thereof.

7. The battery pack as recited in any of claims 1-6, **characterized in that** the metal strap (56, 66, 76, 86, 96) is folded into a truncated square shape so that a middle folded segment of the metal strap (56, 66, 76, 86, 96) is connected to one end plate (55A, 65A, 75A, 85A, 95A) and both extremities of the metal strap (56, 66, 76, 86, 96) are connected to the other end plate (55B, 65B, 75B, 85B, 95B).

8. The battery pack as recited in any of claims 1-7, **characterized in that** the metal strap (6, 26, 36, 46, 56, 66, 76, 86, 96, 106) is a metal sheet that is in a grooved form.

9. The battery pack as recited in any of claims 1-8, **characterized in that** a fitting-in positioner (9, 29, 89, 99) is provided at the side face of the end plate (5, 25, 35, 45, 55, 65, 75, 85, 95, 105) so as to allow the metal strap (6, 26, 36, 46, 56, 66, 76, 86, 96, 106) to be inserted therein and disposed in place.

10. The battery pack as recited in claim 9, **characterized in that** the fitting-in positioner (9, 29, 89, 99) is a fitting groove for allowing the metal strap (6, 26, 36, 46, 56, 66, 76, 86, 96, 106) to be fitted therein.

11. The battery pack as recited in claim 9, **characterized in that** the fitting-in positioner (9, 29, 89, 99) is a through hole (17) for allowing the metal strap (6, 26, 36, 46, 56, 66, 76, 86, 96, 106) to be inserted therethrough.

12. The battery pack as recited in any of claims 1-11, **characterized in that** the end plate (5, 25, 45, 55, 75, 105) is formed of an internally threaded hole (8), and that the metal strap (6, 26, 46, 56, 76, 106) is fixed to the end plate (5, 25, 45, 55, 75, 105) by means of a set screw (7) which is screwed into the internally threaded hole (8).

13. The battery pack as recited in claim 12, **characterized in that** the end plate (5, 25, 35, 45, 55, 65, 75, 85, 95, 105) has a fitting-in positioner (9, 29, 89, 99) at opposite sides thereof, so that the end of the metal strap (6, 26, 36, 46, 56, 66, 76, 86, 96, 106) guided into the fitting-in positioner (9, 29, 89, 99) is fixed to the end plate (5, 25, 35, 45, 55, 65, 75, 85, 95, 105) by means of the set screw (7).

14. The battery pack as recited in claim 13, **characterized in that** the fitting-in positioner (9, 29, 89, 99) is a fitting groove.

15. The battery pack as recited in claim 13, **characterized in that** the fitting-in positioner (9, 29, 89, 99) is a through hole (17).

16. The battery pack as recited in any of claims 11-15, **characterized in that** the end plate (5, 25, 35, 45, 55, 65, 75, 85, 95, 105) is provided, on the side face, with the fitting-in positioner (9, 29, 89, 99) for connecting the metal strap (6, 26, 36, 46, 56, 66, 76, 86, 96, 106) in place; that the fitting-in positioner (9, 29, 89, 99), being provided on the side face of the end plate (5, 25, 35, 45, 55, 65, 75, 85, 95, 105), allows the metal strap (6, 26, 36, 46, 56, 66, 76, 86, 96, 106) to be inserted through the fitting-in positioner (9, 29, 89, 99) by using the through hole (17) which allows the metal strap (6, 26, 36, 46, 56, 66, 76, 86, 96, 106) to be inserted through, so that the metal strap (6, 26, 36, 46, 56, 66, 76, 86, 96, 106) is connected at the fitting-in positioner (9, 29, 89, 99) in place; and that the metal strap (6, 26, 36, 46, 56, 66, 76, 86, 96, 106) inserted therethrough has its end folded inwardly to be connected to the end plate (5, 25, 35, 45, 55, 65, 75, 85, 95, 105).

17. The battery pack as recited in any of claims 1-16, **characterized in that** the metal strap (86) is provided with a threaded portion (86A) at a tip thereof, that the threaded portion (86A) is inserted through the end plate (85), that a nut (87) is screwed onto the threaded portion (86A), and that the metal strap (86) is connected to the end plate (85).

18. The battery pack as recited in claim 17, **characterized in that** the end plate (85) is provided with a fitting-in positioner (89) for a through hole (17) disposed in place after the metal strap (86) is inserted through, and that the nut (87) is screwed onto the threaded portion (86A) protruding from the end plate (85), so that the metal strap (86) is connected to the end plate (85).

19. The battery pack as recited in any of claims 1-18, **characterized in that** the end of the metal strap (6, 26, 36, 46, 56, 66, 76, 86, 96, 106) is connected to the end plate (5, 25, 35, 45, 55, 65, 75, 85, 95, 105) by means of a caulking structure.
